# EUROPÄISCHE PATENTANMELDUNG

(11) **EP 3 002 235 A1**
(43) Veröffentlichungstag der Anmeldung: **06.04.2016**
(21) Anmeldenummer: 15170380.8
(22) Anmeldetag: 03.06.2015
(51) Int. Cl.: B65G 43/02

(54) **VERFAHREN UND ANORDNUNG ZUR REFERENZIERUNG EINES FÖRDERGURTES**

(30) Priorität: 28.08.2014 DE 102014217139
(71) Anmelder: ContiTech Transportbandsysteme GmbH, 30165 Hannover (DE)
(72) Erfinder: Jungk, Andreas, 30916 Isernhagen HB (DE); Wiegmann, Florian, 30159 Hannover (DE); Bunzel, Arndt, 30175 Hannover (DE)
(74) Vertreter: Finger, Karsten

(57) **Zusammenfassung**

Ein Verfahren zur Referenzierung eines Fördergurtes (12), welcher in einer Längsrichtung (L) in Abständen aufeinanderfolgend detektierbare Leiterschleifen (14) aufweist, deren Positionen an dem Fördergurt (12) in einem initialen, unreferenzieiten SOLL-Schleifenplan (SSP) erfasst sind, wobei zur Durchführung des Verfahrens mindestens ein Detektor (16) außerhalb des Fördergurtes (12) ortsfest zum Erfassen der Leiterschleifen (14) angeordnet ist, wobei erfindungsgemäß in einem ersten Umlauf des Fördergurtes (12) die detektierbaren Leiterschleifen (14) und deren Position an dem Fördergurt (12) durch den Detektor (16) erfasst werden, aus den Positionen der detektierten Leiterschleifen (14) durch den Detektor (16) eine erste Datenreihe (D) erstellt wird, welche in einer Speichervorrichtung (20) speicherbar ist, und durch Vergleichen der Positionen der Leiterschleifen (14) der ersten Datenreihe (D) mit den Positionen der Leiterschleifen (14) des SOLL-Schleifenplanes (SSP) eine Referenzschleife (20) ermittelbar ist, durch welche der Anfang des SOLL-Schleifenplanes (SSP) bestimmt wird.

## Beschreibung

Die Erfindung betrifft ein Verfahren zur Referenzierung eines Fördergurtes gemäß dem Oberbegriff des Anspruches 1. Weiterhin betrifft die Erfindung eine Referenzierungsanordnung für einen Fördergurt gemäß dem Oberbegriff des Anspruches 10.

Es ist seit Langem bekannt, zur Detektion von Schlitzen in Fördergurten Systeme zu verwenden, welche auf der Detektion von Leiterschleifen in dem zu überwachenden Fördergurt basieren. Um hierbei auch defekte Leiterschleifen zu erfassen, wird anhand eines initial aufgenommenen Schleifenplanes überprüft, an welcher Position des Fördergurtes eine Leiterschleife zu erwarten ist. Hierbei kann bei der Detektion einer erwarteten Leiterschleife davon ausgegangen werden, dass der Fördergurt an der Position der Leiterschleife unbeschädigt ist. Wird hingegen eine erwartete Leiterschleife nicht detektiert, so kann von einer Beschädigung der Leiterschleife und des Fördergurtes an der Position der Leiterschleife ausgegangen werden. Es besteht daher die Notwendigkeit, die aktuellen, gemessenen Positionen der Leiterschleifen an einer Messstelle mit dem Schleifenplan zu synchronisieren, so dass die Positionen der erwarteten Leiterschleifen mit den Positionen der detektierbaren Leiterschleifen übereinstimmen. Zu diesem Zweck ist es üblich, eine Referenzierung des Fördergurtes vorzunehmen, wobei die Referenzierung des Fördergurtes auch den Anfang der in dem Schleifenplan hinterlegten Positionen der physikalisch in dem Fördergurt vorhandenen Leiterschleifen definiert. Eine verbreitete Möglichkeit zur Referenzierung ist dabei das Einbringen einer zusätzlichen Leiterschleife in den Fördergurt, wobei der Abstand der Referenzschleife beispielsweise geringer sein kann als der Abstand zwischen aufeinanderfolgenden Leiterschleifen. Dadurch ist die Referenzschleife von den Leiterschleifen unterscheidbar und damit als auch als Referenzschleife detektierbar. Zudem sind Systeme bekannt, bei denen elektronische Vorrichtungen wie beispielsweise RFID-Chips oder Magnetcodes zur Identifikation einer Referenzschleife genutzt werden.

Aus der DE 44 44 264 C1 ist ein Verfahren und eine Anordnung zur Überwachung eines Fördergurtes bekannt, wobei mittels in den Fördergurt eingelassenen Leiterschleifen eine Position und ein Zeitpunkt eines Gurtrisses bestimmbar sind. Nachteilig ist hierbei jedoch, dass bei einer Beschädigung oder Zerstörung einer Referenzschleife die Referenzierung des Fördergurtes und damit die Synchronisation mit dem Schleifenplan verloren geht, wodurch eine Bestimmung der bei einer Messung zuerwartetenden Leiterschleifen nicht mehr gegeben ist.

Eine Aufgabe der vorliegenden Erfindung ist es daher, ein Verfahren der eingangs beschriebenen Art bereitzustellen, das eine Referenzierung, insbesondere einer bestehenden Förderanlage, ermöglicht. Weiterhin ist es eine Aufgabe der vorliegenden Erfindung, eine Anordnung zur Referenzierung eines Fördergurtes bereitzustellen, die eine vereinfachte und kostengünstige Möglichkeit zur Referenzierung eines bestehenden Fördergurtes ermöglicht.

Die Aufgabe wird erfindungsgemäß durch ein Verfahren mit den Merkmalen gemäß den Merkmalen des Anspruches 1 sowie einer Referenzierungsanordnung gemäß den Merkmalen des Anspruches 10 gelöst. Vorteilhafte Weiterbildungen sind in den Unteransprüchen beschrieben.

Somit betrifft die vorliegende Erfindung ein Verfahren zur Referenzierung eines Fördergurtes, welcher in einer Längsrichtung in Abständen aufeinanderfolgend detektierbare Leiterschleifen aufweist, deren Positionen an dem Fördergurt in einem initialen, unreferenzierten Soll-Schleifenplan erfasst sind, wobei zur Durchführung des Verfahrens mindestens ein Detektor außerhalb des Fördergurtes ortsfest zum Erfassen der Leiterschleifen angeordnet ist. Erfindungsgemäß werden in einem ersten Umlauf des Fördergurtes die detektierbaren Leiterschleifen und deren Position an dem Fördergurt durch den Detektor erfasst, aus den Positionen der detektierten Leiterschleifen wird durch den Detektor eine erste Datenreihe erstellt, welche in einer Speichervorrichtung speicherbar ist, und durch Vergleichen der Positionen der Leiterschleifen der ersten Datenreihe mit den Positionen der Leiterschleifen des Soll-Schleifenplanes ist eine Referenzschleife ermittelbar, durch welche der Anfang des Soll-Schleifenplanes bestimmt wird.

Der Erfindung liegt die Erkenntnis zugrunde, dass basierend auf einer Erfassung der tatsächlich detektierbaren Leiterschleifen und einem Vergleich mit dem initialen Soll-Schleifenplan eine Synchronisation der Positionen der zu erwartenden Leiterschleifen mit den Sollpositionen der Leiterschleifen ermöglicht werden kann. In dem initialen Soll-Schleifenplan sind dabei die Positionen vermerkt, an denen physikalische Leiterschleifen in dem Fördergurt vorhanden sind. Bei einem Umlauf des Fördergurtes kann ein Detektor die tatsächlich detektierbaren Leiterschleifen erfassen, sowie deren absolute und/oder relative Position an dem Fördergurt bestimmen. Die Position einer detektierten Leiterschleife wird dabei als Messwert erfasst, wobei aus mehreren Messwerten eine erste Datenreihe für den ersten Umlauf des Fördergurtes erstellt wird. Die Erfassung der Positionen der detektierbaren Leiterschleifen in dem Fördergurt beginnt dabei an einer der Leiterschleifen. Diese Leiterschleife kann zunächst als erste angenommene Referenzschleife betrachtet werden, auf die sich die Positionen der folgenden detektierten Leiterschleifen in der ersten Datenreihe beziehen. Die erste Datenreihe ist dabei der ersten angenommen Referenzschleife zugeordnet. Diese erste Datenreihe ist zusammen mit dem Soll-Schleifenplan in einer Speichervorrichtung speicherbar und abrufbar. Bei einer Übereinstimmung der tatsächlich erfassten Positionen der detektierbaren Leiterschleifen auf dem Fördergurt mit den in dem Soll-Schleifenplan hinterlegten physikalischen Positionen der Leiterschleifen ist eine Leiterschleife bestimmbar, welche den Anfang des Soll-Schleifenplanes bestimmt, wobei diese Leiterschleife als tatsächliche Referenzschleife definiert werden kann. Ausgehend von dieser tatsächlichen Referenzschleife kann entsprechend der in dem Soll-Schleifenplan hinterlegten Positionen der physikalisch in dem Fördergurt vorhandenen Leiterschleifen ermittelt werden, an welchen Positionen des Förderbandes eine Leiterschleife detektierbar sein soll und erwartet werden kann. Dies hat den Vorteil, dass eine Referenzposition oder Referenzschleife eines Fördergurtes kostengünstig und ohne zusätzliche elektronische Systeme bestimmt werden kann, insbesondere wenn eine vorgesehene Referenzschleife oder Referenzposition des Fördergurtes beschädigt und nicht detektierbar ist.

In einer vorteilhaften Ausgestaltung des Verfahrens werden die Positionen der detektierbaren Leiterschleifen mittels einer Messung des Abstandes zwischen zwei aufeinanderfolgenden detektierbaren Leiterschleifen ermittelt. Dabei dient der gemessene Abstand zwischen den zwei aufeinanderfolgenden detektierten Leiterschleifen als Messwert, wobei alle Messwerte für einen ersten Umlauf des Fördergurtes zu einer ersten Datenreihe zusammengefasst werden können. Dies hat den Vorteil, dass die gemessenen Abstände zwischen zwei aufeinanderfolgenden detektierten Leiterschleifen unmittelbar mit den aus dem Soll-Schleifenplan bekannten Abständen zwischen Leiterschleifen verglichen werden können. Dadurch kann unmittelbar festgestellt werden, ob an einer gemäß Soll-Schleifenplan vorgesehenen Position eine erwartete Leiterschleife erfasst wird oder nicht.

Vorteilhafterweise kann der erste Umlauf zur Erstellung einer ersten Datenreihe mit einer beliebigen Leiterschleife als erste angenommene Referenzschleife durchgeführt werden. Die bei einem bestimmten Umlauf erstellte Datenreihe wird jeweils einer bestimmten Leiterschleife zugeordnet, die für diese Datenreihe als angenommene Referenzschleife betrachtet wird. Die für einen Umlauf des Fördergurtes erstellte Datenreihe beginnt dabei mit der Position der zugehörigen angenommenen Referenzschleife. Dies hat den Vorteil, dass zur Referenzierung eines Fördergurtes keine besonderen Vorbereitungs- oder Markierungsmaßnahmen getroffen werden müssen.

In einer besonders vorteilhaften Ausgestaltung des Verfahrens wird für eine in dem Soll-Schleifenplan angegebene Anzahl an Leiterschleifen eine entsprechende Anzahl an Datenreihen erstellt. Dies hat den Vorteil, dass für jede physikalisch vorhandene Leiterschleife eine Datenreihe erstellt wird, wobei in Abhängigkeit der jeweiligen Leiterschleife, der sogenannten angenommenen Referenzschleife, die Positionen der detektierbaren Leiterschleifen erfasst und in der Datenreihe zusammengestellt werden. Dies ermöglicht bei einem Abgleich mit dem Soll-Schleifenplan eine verbesserte Bestimmung der tatsächlichen Referenzschleife.

Besonders vorteilhaft werden mehrere Datenreihen erstellt, wobei bei der Erstellung der mehreren Datenreihen jeweils die zugehörige angenommene Referenzschleife um eine Leiterschleife verschoben wird. Unter Verschieben der angenommenen Referenzschleife ist hierbei zu verstehen, dass bei zwei aufeinanderfolgenden Datenreihen die zu der zweiten bzw. nachfolgenden Datenreihe zugehörige angenommene Referenzschleife eine Leiterschleife ist, welche in Laufrichtung des Fördergurtes auf die der ersten Datenreihe zugeordnete Leiterschleife unmittelbar folgt. Dies ermöglicht eine systematische Generierung von Datenreihen, wobei bei der Erstellung einer Datenreihe für jede physikalisch gesehene Leiterschleife zumindest eine Datenreihe erstellt wird, bei der die gemessenen Positionen der detektierten Leiterschleifen den in dem Soll-Schleifenplan hinterlegten Positionen der Leiterschleifen entspricht.

In einer weiteren vorteilhaften Ausgestaltung des Verfahrens wird für jede Datenreihe und ihre zugeordnete, angenommene Referenzschleife ein Fehlerwert generiert. Der Fehlerwert kann dabei aus einzelnen Werten zusammengesetzt werden, welche auf einem erwarteten Abstand zwischen zwei Leiterschleifen und/oder einer erwarteten Position einer nachfolgenden Leiterschleife basieren können, wobei die erwartete Position und/oder der erwartete Abstand auf dem Soll-Schleifenplan basiert. Die einzelnen Fehlerwerte können dabei summiert werden. Bei einem gemessenen Abstand zwischen zwei aufeinanderfolgenden Leiterschleifen, der dem erwarteten Abstand entspricht, kann beispielsweise ein Fehlerwert von 0 angenommen werden. Ist der gemessene Abstand zwischen zwei unmittelbar aufeinander folgenden detektierten Leiterschleifen kleiner als der erwartete Abstand gemäß dem Soll-Schleifenplan, so kann als Fehlerwert der tatsächlich gemessene Abstand genommen werden. Ist der gemessene Abstand zwischen zwei unmittelbar aufeinanderfolgenden detektierten Leiterschleifen größer als der erwartete Abstand gemäß Soll-Schleifenplan, so kann als Fehlerwert die Differenz zwischen dem erwarteten und dem gemessenen Abstand genommen werden. Zudem kann bei einem tatsächlichen gemessenen Abstand, welcher größer ist als der erwartete Abstand, eine angenommene Schleife in die Datenreihe aufgenommen werden, wobei die angenommene Leiterschleife als Platzhalter für eine möglicherweise beschädigte Leiterschleife, die nicht detektierbar ist, dienen kann. Durch die Generierung des Fehlerwertes kann eine Bestimmung der Referenzschleife auch bei einem Fördergurt mit einer oder mehreren beschädigten, nicht detektierbaren Leiterschleifen ermöglicht werden.

Besonders vorteilhafterweise werden die Fehlerwerte der angenommenen Referenzschleifen miteinander verglichen, und die angenommene Referenzschleife mit dem geringsten Fehlerwert wird als tatsächliche Referenzschleife des Soll-Schleifenplanes bestimmt. Dem liegt die Annahme zugrunde, dass die Datenreihe mit dem geringsten Fehlerwert im Wesentlichen dem Soll-Schleifenplan entspricht, das bedeutet, dass die tatsächlich gemessenen Positionen der detektierten Leiterschleifen auf dem Fördergurt den in dem Soll-Schleifenplan hinterlegten Positionen der physikalisch vorhandenen Leiterschleifen entsprechen. Dabei kann die angenommene Referenzschleife, welche dem niedrigsten Fehlerwert zugeordnet ist, als die tatsächliche Referenzschleife angesehen werden, welche den Beginn des Soll-Schleifenplanes definiert und auf die sich die Positionen der Leiterschleifen des Soll-Schleifenplanes beziehen.

Nach der Bestimmung der tatsächlichen Referenzschleife wird ein Ist-Schleifenplan generiert, welcher mit dem Soll-Schleifenplan verglichen wird, um fehlerhafte Leiterschleifen zu bestimmen. Der generierte Ist-Schleifenplan kann dabei die Positionen der detektierbaren Leiterschleifen des Fördergurtes erfassen. Der Ist-Schleifenplan kann in einer Speichervorrichtung zusammen mit dem Soll-Schleifenplan hinterlegt werden. Durch einen Vergleich des Ist-Schleifenplanes mit den Positionen der detektierten Leiterschleifen mit den in dem Soll-Schleifenplan hinterlegten Positionen der physikalisch vorhandenen Leiterschleifen können auf einfache Weise die nicht detektierten Leiterschleifen und die zugehörigen Positionen in dem Fördergurt bestimmt werden. Daraus kann beispielswiese auf eine Beschädigung des Fördergurtes an den Positionen der nicht detektierten Leiterschleifen geschlossen werden.

Weiterhin werden vorteilhafterweise basierend auf den erstellten Datenreihen und/oder dem erstellten Ist-Schleifenplan Anfälligkeiten bestimmter Leiterschleifen bestimmt und/oder Reparaturempfehlungen generiert. Anhand der erstellten Datenreihen und/oder dem erstellten Ist-Schleifenplan können, insbesondere bei wiederholter Anwendung des Verfahrens, Leiterschleifen bestimmt werden, die beispielsweise für besonders häufiges Ausfallen anfällig sind, wodurch überlastete oder für Beschädigungen anfällige Bereiche des Fördergurtes bestimmbar sind. Zudem kann anhand nicht detektierter Leiterschleifen und deren Position eine Reparaturempfehlung für den Fördergurt generiert werden, so dass eine Reparatur durchgeführt werden kann, bevor es zu einem Ausfall des Fördergurtes kommt.

Die Erfindung betrifft weiterhin eine Referenzierungsanordnung für einen Fördergurt, insbesondere zur Durchführung des wie vorstehend beschriebenen Verfahrens, mit an dem Fördergurt angeordneten detektierbaren Leiterschleifen, welche in einer Längsrichtung in Abständen aufeinanderfolgend angeordnet sind, deren Position an dem Fördergurt in einem initialen unreferenzierten Soll-Schleifenplan erfasst sind, mit einer Speichervorrichtung zum Speichern des Soll-Schleifenplanes, und mit mindestens einem außerhalb des Fördergurtes ortsfest angeordneten Detektor zum Erfassen der Leiterschleifen. Erfindungsgemäß ist der Detektor derart ausgebildet, dass in einem ersten Umlauf des Fördergurtes die detektierbaren Leiterschleifen und deren Position an dem Fördergurt durch den Detektor erfassbar sind, aus den Positionen der detektierten Leiterschleifen durch den Detektor eine erste Datenreihe erstellbar ist, welche in einer Speichervorrichtung speicherbar ist, durch Vergleichen der Positionen der Leiterschleifen der ersten Datenreihe mit den Positionen der Leiterschleifen des Soll-Schleifenplanes einer Referenzschleife bestimmbar ist, durch welche der Anfang des Soll-Schleifenplanes bestimmbar ist. Die Referenzierungsanordnung kann beispielsweise in einem Überwachungssystem eines Fördergurtes integriert sein, wodurch eine kostengünstige Referenzierung des Fördergurtes ohne zusätzliche elektronische Vorrichtung ermöglicht wird.

Ein Ausführungsbeispiel und weitere Vorteile der Erfindung werden nachstehend im Zusammenhang mit den folgenden Figuren erläutert.

Darin zeigt:
- Fig. 1: eine perspektivisch-schematische Darstellung eines Fördergurtes mit Leiterschleifen;
- Fig. 2: eine perspektivisch-schematische Darstellung des Fördergurtes aus Fig. 1 mit einer zerstörten Leiterschleife; und
- Fig. 3: ein Ablaufdiagramm zur Erstellung von Datenreihen für eine Mehrzahl an Leiterschleifen.

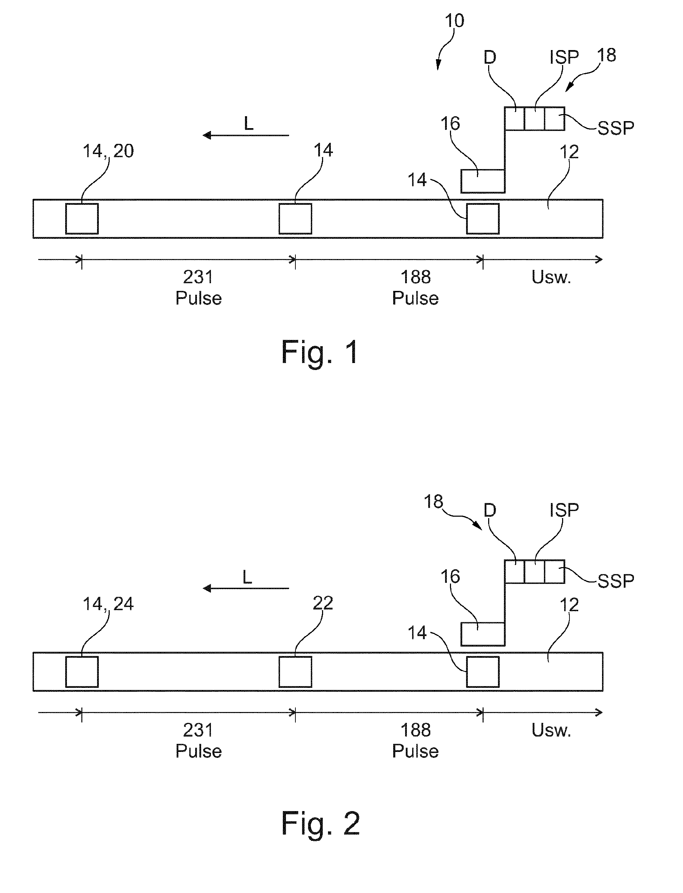

Fig. 1 zeigt eine Referenzierungsanordnung 10 für einen Fördergurt 12, wobei der Fördergurt in Längsrichtung L bewegt wird. In dem Fördergurt 12 sind in ungleichmäßigen Abständen Leiterschleifen 14 angeordnet, welche oberflächenbündig in dem Fördergurt 12 angeordnet sein können. Die Leiterschleifen 14 sind dabei flächig in dem Fördergurt 12 angeordnet und erstrecken sich im Wesentlichen über die gesamte Breite des Fördergurtes 12. Bei einer Bewegung des Fördergurtes 12 werden die Leiterschleifen 14 an einem Detektor 16 vorbeigeführt, wobei der Detektor 16 die intakten Leiterschleifen 14 erfassen kann. Der Detektor 16 kann dabei die Abstände von aufeinanderfolgenden detektierbaren Leiterschleifen 14 messen, beispielsweise in Form von Pulsen, wobei jeder Puls beispielsweise ein Abfragesignal sein kann, welches von dem Detektor 16 auf das Förderband 12 ausgesendet wird und welches von einer Leiterschleifen 14 unbeantwortet bleibt. Dabei kann der Detektor 16 die Anzahl der ausgesendeten und unbeantworteten Pulse zählen, bis eine Leiterschleife 14 an dem Detektor 16 vorbeigeführt wird, welche ein Antwortsignal auf den Puls des Detektors 16 zurücksenden kann. Durch das Antwortsignal der Leiterschleife 14 kann der Detektor 16 das Vorhandensein der Leiterschleife 14 sowie deren Position in dem Fördergurt 12 erfassen. Die gemessenen Abstände zwischen den Leiterschleifen 14 können dabei zu Datenreihen D zusammengeführt werden, welche in einer Speichereinheit 18, die mit dem Detektor 16 verbunden ist, gespeichert werden kann. In dem Speicher 18 kann ebenfalls ein Soll-Schleifenplan SSP gespeichert werden, welcher die physikalische Anordnung von Leiterschleifen 14 auf dem Förderband 12 bezogen auf eine Referenzschleife 20 enthalten kann. Ausgehend von der tatsächlichen Referenzschleife 20 des Soll-Schleifenplanes SSP kann der Detektor 16 einen Ist-Schleifenplan ISP ermitteln, der die Anordnung und Position der tatsächlich detektierbaren Leiterschleifen 14 auf dem Fördergurt 12 erfasst. Durch einen Vergleich des Ist-Schleifenplanes ISP mit dem Soll-Schleifenplan SSP können physikalisch vorhandene, aber nicht detektierbare Leiterschleifen 14 ermittelt werden.

Ein Fördergurt 12 mit einer zerstörten Leiterschleife 22, welche durch den Detektor 16 nicht detektierbar ist, ist in Fig. 2 dargestellt. Aufgrund der zerstörten Leiterschleife 22 misst der Detektor 16 bei einem in Längsrichtung L laufenden Fördergurt 12 einen deutlich größeren Abstand zwischen zwei aufeinanderfolgenden detektierbaren Leiterschleifen 14, als dies der Fall ohne die zerstörte Leiterschleife 22 wäre. Im dargestellten Beispiel misst der Detektor 16 so 419 Pulse anstelle von 231 Pulsen bzw. 188 Pulsen zwischen zwei unmittelbar aufeinanderfolgenden Leiterschleifen 14.

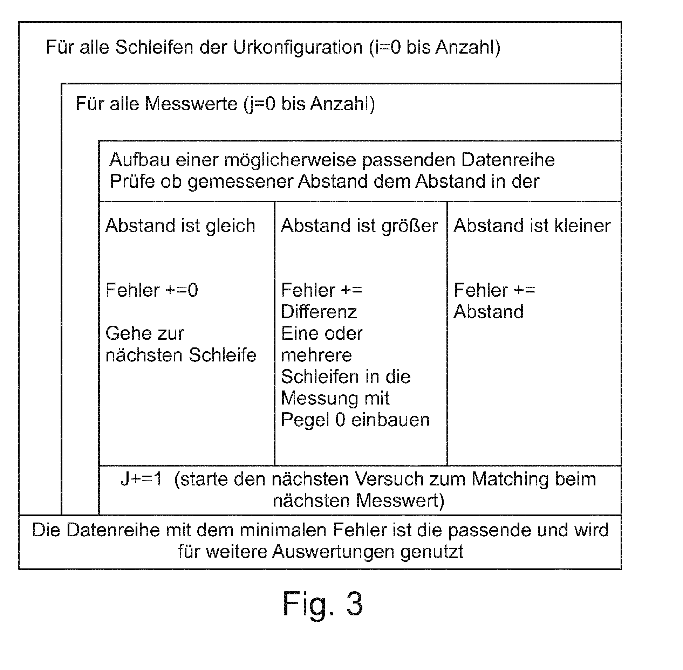

Zur Bestimmung einer Referenzschleife 20 kann der Detektor 16, wie in Fig. 3 dargestellt, für jede gemäß Soll-Schleifenplan SSP physikalisch vorhandene Leiterschleife 14 eine Datenreihe erstellen. Hierbei werden für eine Datenreihe D alle gemessenen Abstände eines Umlaufes des Fördergurtes 12 als Messwerte zu einer Datenreihe D zusammengefasst. Die gemessenen Abstände der Datenreihe D stimmen dabei idealerweise im Wesentlichen mit den in dem Soll-Schleifenplan SSP hinterlegten Abständen der Leiterschleifen 14 überein, so dass die Leiterschleife 14, die der entsprechenden Datenreihe D als angenommene Referenzschleife 24 zugeordnet ist, und die den Anfang der Datenreihe D definiert, der tatsächlichen Referenzschleife 20 entspricht. Dazu kann der Detektor 16 die gemessenen Abstände mit den in dem Soll-Schleifenplan SSP hinterlegten Abständen der physikalisch vorhandenen Leiterschleifen 14 abgleichen.

Aus diesem Abgleich kann in Abhängigkeit der gemessenen und erwarteten Abstände zwischen zwei aufeinanderfolgenden Leiterschleifen 14 ein Fehlerwert bestimmt werden, welcher aus Einzelwerten aufsummiert werden kann. Bei einem gemessenen Abstand zwischen zwei unmittelbar aufeinanderfolgenden Leiterschleifen 14, welche dem erwarteten Abstand entspricht, kann ein Fehlerwert von 0 angesetzt werden. Ist der tatsächlich gemessene Abstand zwischen zwei Leiterschleifen 14 jedoch kleiner als der erwartete Abstand, so kann der gemessene Abstand als Fehlerwert verwendet werden. Bei einem gemessenen Abstand, der tatsächlich größer ist als der erwartete Abstand, wie in Fig. 2 dargestellt, kann als Fehlerwert die Differenz zwischen dem erwarteten Abstand und dem tatsächlich gemessenen Abstand als Fehlerwert berücksichtigt werden. In dem in Fig. 2 dargestellten Beispiel würde der Detektor 419 Pulse messen statt der erwarteten 231. Somit würden als Fehlerwert 188 Pulse berücksichtigt werden. Zudem kann der Detektor 16 eine oder mehrere Leiterschleifen an der erwarteten Position annehmen. Bei einer Datenreihe D mit dem geringsten Fehlerwert kann dabei angenommen werden, dass die dieser Datenreihe D zugrunde liegenden gemessenen Abstände der Leiterschleifen 14 im Wesentlichen mit den in dem Soll-Schleifenplan SSP hinterlegten Abständen übereinstimmen. Somit kann die angenommene Referenzschleife 24, welche den Beginn der Datenreihe D definiert und dieser zugeordnet ist, als tatsächliche Referenzschleife 20 angesehen werden.

### Bezugszeichenliste

### (Teil der Beschreibung)

- D: Datenreihe
- ISP: IST-Schleifenplan
- L: Längsrichtung des Fördergurtes 12
- SSP: SOLL-Schleifenplan

- 10: Referenzierungsanordnung
- 12: Fördergurt
- 14: Leiterschleife
- 16: Detektor
- 18: Speichervorrichtung
- 20: Referenzschleife
- 22: nicht detektierbare Leiterschleife
- 24: angenommene Referenzschleife

## Patentansprüche

1. Verfahren zur Referenzierung eines Fördergurtes (12), welcher in einer Längsrichtung (L) in Abständen aufeinanderfolgend detektierbare Leiterschleifen (14) aufweist, deren Positionen an dem Fördergurt (12) in einem initalen, unreferenzierten SOLL-Schleifenplan (SSP) erfasst sind,
wobei zur Durchführung des Verfahrens mindestens ein Detektor (16) außerhalb des Fördergurtes (12) ortsfest zum Erfassen der Leiterschleifen (14) angeordnet ist,
**dadurch gekennzeichnet, dass**
in einem ersten Umlauf des Fördergurtes (12) die detektierbaren Leiterschleifen (14) und deren Position an dem Fördergurt (12) durch den Detektor (16) erfasst werden, aus den Positionen der detektierten Leiterschleifen (14) durch den Detektor (16) eine erste Datenreihe (D) erstellt wird, welche in einer Speichervorrichtung (20) speicherbar ist, und durch Vergleichen der Positionen der Leiterschleifen (14) der ersten Datenreihe (D) mit den Positionen der Leiterschleifen (14) des SOLL-Schleifenplanes (SSP) eine Referenzschleife (20) ermittelbar ist, durch welche der Anfang des SOLL-Schleifenplanes (SSP) bestimmt wird.

2. Verfahren nach Anspruch 1, **dadurch gekennzeichnet, dass** die Positionen der detektierbaren Leiterschleifen (14) mittels einer Messung des Abstandes zwischen zwei aufeinanderfolgenden detektierbaren Leiterschleifen (14) ermittelt werden.

3. Verfahren nach Anspruch 1 oder 2, **dadurch gekennzeichnet, dass** der erste Umlauf zur Erstellung einer ersten Datenreihe (D) mit einer beliebigen Leiterschleife (14) als erste angenommene Referenzschleife (24) durchgeführt wird.

4. Verfahren nach einem der vorherigen Ansprüche, **dadurch gekennzeichnet, dass** für eine in dem SOLL-Schleifenplan (SSP) angegebenen Anzahl an Leiterschleifen (14) eine entsprechende Anzahl an Datenreihen (D) erstellt wird.

5. Verfahren nach einem der vorherigen Ansprüche, **dadurch gekennzeichnet, dass** mehrere Datenreihen (D) erstellt werden, wobei bei der Erstellung der mehreren Datenreihen (D) jeweils die zugehörige angenommene Referenzschleife (24) um eine Leiterschleife (14) verschoben wird.

6. Verfahren nach einem der vorherigen Ansprüche, **dadurch gekennzeichnet, dass** für jede Datenreihe (D) und ihre zugeordnete angenommene Referenzschleife (24) ein Fehlerwert generiert wird.

7. Verfahren nach Anspruch 6, **dadurch gekennzeichnet, dass** die Fehlerwerte der angenommenen Referenzschleifen (24) miteinander verglichen werden, und die angenommene Referenzschleife (24) mit dem geringsten Fehlerwert als tatsächliche Referenzschleife (20) des SOLL-Schleifenplanes (SSP) bestimmt wird.

8. Verfahren nach Anspruch 7, **dadurch gekennzeichnet, dass** nach Bestimmung der tatsächlichen Referenzschleife (20) ein IST-Schleifenplan (ISP) generiert wird, welcher mit dem SOLL-Schleifenplan (SSP) verglichen wird, um fehlerhafte Leiterschleifen (22) zu bestimmen.

9. Verfahren nach Anspruch 8, **dadurch gekennzeichnet, dass** basierend auf den erstellten Datenreihen (D) und/oder dem erstellten IST-Schleifenplan (ISP) Anfälligkeiten bestimmter Leiterschleifen (14,22) bestimmt und/oder Reparaturempfehlungen generiert werden.

10. Referenzierungsanordnung für einen Fördergurt (12), insbesondere zur Durchführung des Verfahrens nach einem der Ansprüche 1 bis 9, mit an dem Fördergurt (12) angeordneten detektierbaren Leiterschleifen (14), welche in einer Längsrichtung (L) in Abständen aufeinanderfolgend angeordnet sind, deren Positionen an dem Fördergurt (12) in einem initialen, unreferenzierten SOLL-Schleifenplan (SSP) erfasst sind, mit einer Speichervorrichtung (20) zum Speichern des SOLL-Schleifenplanes (SSP), und mit mindestens einem außerhalb des Fördergurtes (12) ortsfest angeordneten Detektors (16) zum Erfassen der Leiterschleifen (14),
**dadurch gekennzeichnet, dass**
der Detektor (16) derart ausgebildet ist, dass in einem ersten Umlauf des Fördergurtes (12) die detektierbaren Leiterschleifen (14) und deren Position an dem Fördergurt (12) durch den Detektor (16) erfassbar sind, aus den Positionen der detektierten Leiterschleifen (14) durch den Detektor (16) eine erste Datenreihe (D) erstellbar ist, welche in einer Speichervorrichtung (20) speicherbar ist, durch Vergleichen der Positionen der Leiterschleifen (14) der ersten Datenreihe (D) mit den Positionen der Leiterschleifen (14) des SOLL-Schleifenplanes (SSP) eine Referenzschleife (20) bestimmbar ist, durch welche der Anfang des SOLL-Schleifenplanes (SSP) bestimmbar ist.
